# EUROPEAN PATENT SPECIFICATION

(11) **EP 0 765 606 B1**
(45) Date of publication and mention of the grant of the patent: **13.06.2001**
(21) Application number: 95306833.5
(22) Date of filing: 27.09.1995
(51) Int. Cl.: A23G 1/18, A23G 3/02, A23L 3/30

(54) **Process for retarding fat bloom in fat-based confectionery masses**
Verfahren zur Verzögerung des Fettbleichen von Fett-enthaltende Konfekten
Procédé pour retarder le blanchiment des confiseries à base de graine

(43) Date of publication of application: 02.04.1997
(73) Proprietor: Kraft Foods R & D, Inc., Rye Brook, New York 10625 (US)
(72) Inventor: Baxter, John Frederic, D-81479 München (DE); Morris, George John, Bourn Cambridge CB5 7SX (GB); Gaim-Marsoner, Gunther, D-85635 Höhenkirchen-Siegertsbrunn (DE)
(74) Representative: Eyles, Christopher Thomas

(56) References cited:
- WO-A-92/20420
- US-A- 5 209 879

## Description

This invention is related to a method for retarding fat bloom in fat-based confectioneries, such as chocolate confectioneries.

Fat bloom is recognized as a grayish coating on the surface of fat-based confectioneries, such as chocolate, milk or dark. In the case of chocolate it is more visible on dark chocolate than on milk chocolate. When touched lightly with the fingertips, it has a greasy appearance and is easily removed. Under the microscope tiny fat crystals are visible. This grayish coating is detrimental to the appearance of chocolate and can be a costly defect leading to great losses for chocolate manufacturers.

Fat bloom is believed to be caused by, but is not limited to, bad tempering of chocolate; incorrect cooling methods, including covering cold centers; the presence of soft fat in the centers of chocolate covered units; warm storage conditions; and addition of fats to chocolate that are incompatible with cocoa butter.

Attempts to explain why "bloom" occurs usually include descriptions of how fat crystals separate from the matrix of chocolate during partial liquefication resulting from temperature fluctuations and the like; then, on recrystallization, fat sometimes migrates to the surface. Though ordinarily there is no real deterioration or taste impairment in chocolate that has "bloomed", losses are incurred by chocolate manufacturers when this occurs because consumers do not care for unsightly chocolate.

Chocolate bloom can be minimized by tempering the cocoa butter or chocolate fat composition. Tempering is the process of inducing satisfactory crystal nucleation of the liquid fat in chocolate so that the chocolate forms stable β crystals. Tempering is typically thermal, and involves melting the fat at approximately 43-50°C and then slowly cooling with constant stirring to 26-29°C to form nuclei for fat crystal growth. During this time the chocolate becomes more viscous and if not quickly processed further it will become too thick to process. It is then typically reheated to 31-32°C (lower for milk chocolate, depending on the milk fat content) to melt unstable crystals and held at that temperature during production. Subsequent cooling then produces only stable fat crystals.

Cocoa butter consists mainly of triglycerides which are a mixture of POS (1-palmitoyl-2-oleyl-3-stearoylglycerol), SOS (2-oleoyl-1,3-distearoylglycerol) and POP (1,3-dipalmitoyl-2-oleoylglycerol) It is somewhat variable in composition, depending upon the type of cacao bean from which it is obtained. Typically it contains 36% POS, 26% SOS and 16% POP. In common with certain other fats cocoa butter exhibits polymorphism. Thus it can exist in different polymorphic forms, that is to say solid phases of the same chemical composition that differ among themselves in crystalline structure but yield identical liquid phases upon melting. At least four polymorphic forms of cocoa butter have been identified (*Minifie*, *Chocolate, Cocoa & Confectionery : Science & Technology*, *Second Edition,* The AVI Publishing Company, Westport, Connecticut, 1980, pages 495 and 496). These are designated γ form, α form, β form and β' form. These are described as having the characteristics set out in Table 1.

**TABLE 1**

| Form | Approximate melting point | Comment |
|---|---|---|
| γ | 17°C (63°F) | very short "life" at all temperatures |
| α | 21°-24°C (70°-75°F) | short "life" at all temperatures |
| β*'* | 27°-29°C (81°-84°F) | gradual transition at ordinary temperatures to β form |
| β | 34°-35°C (95°F) | the stable form |

A fifth form, designated β", is said to be produced if the α form is held for about an hour just below its melting point temperature. It will apparently change to the p form in about a month at normal temperatures.

Other authors designate the four principal polymorphic forms as α-2; β'-2, β-3V and β-3VI in increasing order of melting point. The β-3V form is the desired structure since it produces the bright glossy appearance of chocolate coatings.

In the textbook *Industrial Chocolate Manufacture and Use* (second edition) edited by S.T. Beckett, published by Blackie Academic and Professional (1994), pages 156 and 157, six different polymorphic forms of cocoa butter are mentioned. These are designated Forms I to VI or by Greek letters. Their properties are set out in Table 2 below.

**TABLE 2**

| Form | m.p. °C [°F] | Chain packing |
|---|---|---|
| I β*'*₂ | 16-18 [61-67] | Double |
| II α | 21-22 [70-72] | Double |
| III Mixed | 25.5 [78] | Double |
| IV β*'*₁ | 27-29 [81-84] | Double |
| V β₂ | 34-35 [93-95] | Triple |
| VI β₁ | 36 [97] | Triple |

The convention which ascribes the nomenclature Forms I to VI of Table 2 is further described by Wille, R.L. and Lutton, E.S. *J*. *Am*. *Oil Chem*. *Soc.,* 43 (1966) 942, whilst the convention using the Greek letters of Table 2 is explained by Larsson, K. *Acta Chem. Scand*., 20 (1966) 2255-2260. On page 183 of the same textbook it is said that, according to Vaeck, S.V. "Cacao butter and fat bloom", *14th PCMA Production Conf*., Pennsylvania (1960) the polymorphic forms of cocoa butter are as set out in Table 3.

**TABLE 3**

| Form | Crystallizes | Melting range | Stability | Contraction |
|---|---|---|---|---|
| γ | Under 62.5°F (16.9°C) | Up to 62.5°F (16.9°C) | Unstable | |
| α | From γ | Up to 75°F (23.8°C) | Unstable | 0.060 ml/g |
| β₁ | 62.5°F-72.5°F (16.9°C-22.5°C) | 59°F-85°F (15°C-29.4°C) | Semi-stable | 0.086 ml/g |
| β₂ | - | Data not available | - | |
| β | 72.5°F-92.5°F (22.5°C-33.6°C) | 68°F-95°F (20°C-35°C) | Stable | 0.097 ml/g |

However, in the original paper by Vaeck, S. Victor as published in *Twenty* Years *of Confectionery and Chocolate Progress,* The AVI Publishing Company, Inc., Westport, Connecticut (1970), Chapter 15, pages 123 to 155, he describes the forms as γ, α, β', β" and β; in this specification the term β polymorph is used as described by Vaeck, S. Victor in this last mentioned publication. The α form has a hexagonal crystal structure while the β' polymorph has an orthorhombic crystal structure and the β polymorph has a triclinic crystal structure. The β polymorph is the most stable crystalline form that can be produced by tempering, even though it is reported that there is a more stable form still which is formed after long storage, i.e. the polymorph designated VI or β₁ in Table 2 above. The β polymorph exhibits much smaller crystals than the unstable polymorphs, such as the α, β', β" or γ polymorphs.

Many modem chocolate plants for molding, enrobing or shell production with large outputs are provided with automatic temperers typically constructed in the form of tubular or plate heat exchangers with each section controlled thermostatically. Chocolate is delivered from the storage tanks and is subjected to the cooling and warming cycles summarized above. Because time, temperature and processing conditions are critical for proper chocolate tempering, many tempering devices are complex and expensive to purchase and operate.

In another method of tempering, solid chocolate shavings are added as seed crystals to liquid chocolate at a few degrees under its melting point, e.g. for dark chocolate at 32-33°C. This is a particularly good technique for a small confectionery manufacturer that does not produce its own chocolate. However, the shavings are sometimes difficult to disperse and may cause lumps in the finished product. Lumps travelling in a pipe system can cause serious trouble as, even if screens are provided, these may become blocked. Even so, some chocolate technologists advocate this method of tempering and even go to the length of preparing their chocolate seed by cooling well-grained chocolate in very thin layers on an enrober band. It is claimed that the nature of this seed encourages the formation of a maximum of stable forms of cocoa butter in the chocolate.

The purpose of tempering is to obtain a large number of the smallest possible β crystals. Besides bloom resistance, successful tempering leads to a number of desirable characteristics in chocolate including good flow properties, rapid solidification during cooling, maximum contraction (for ease in demolding), high gloss, and resistance to fat migration. In well-tempered cocoa butter, the released crystallization heat and the cooling rate are in equilibrium.

Even in tempered chocolate, bloom is observed with bad tempering, incorrect cooling methods (e.g., too rapid cooling), warm storage conditions, and the addition of fats incompatible with cocoa butter. As mentioned above, to prevent or retard bloom, the fat crystals must be not only stable, but also small, so that they do not grow out of the surface of the chocolate. Large crystals also increase viscosity, leading to problems during coating and molding processes.

Control of the polymorphic forms in cocoa butter is further complicated by the presence of other fats such as milk fat. Blending milk fat into cocoa butter to form milk chocolate and adding nut oils such as hazelnut and the like are common practices in the formulation of various confectionery products. Though milk fat typically helps to retard bloom, the complex effects observed in cocoa butter blends further complicates the development of tempering procedures for the manufacture of chocolate products.

### BACKGROUND ART

In addition to careful control of tempering conditions, certain additives have been suggested to enhance bloom retardation. One study tested twenty additives for bloom prevention and found only three that are effective: butterfat, biscuitine (arachis oil and hardened fat), and hardened arachis oil (Minifie, *Chocolate, Cocoa and Confectionery: Science and Technology*, London, 1970, page 404).

Bracco disclosed a method of inhibiting bloom in chocolate products by incorporating into the chocolate 0.5 to 5% of trigylcerides formed by interesterifying coconut oil, palm kernel or babassu oil with other oils (U.S. Patent No. 3,491,677, column 2, lines 18 to 19 and 30 to 39).

More recently, Ehrman, *et al.,* disclosed a tempering process for confectionery compositions having a fat component containing at least about 70% specified isomers of triglycerides bearing medium (C₆ to C₁₀) and long (C₂₀ to C₂₄) saturated acid moieties, up to 15% milkfat, up to 20% cocoa butter, and no more than 4% diglycerides (column 3, lines 25 to 44, U.S. Patent No. 5,066, 510). The process involved rapidly cooling the composition to 57°F (13.9°C) or less for a period of time sufficient to form an effective amount of β-3 crystals from a portion of the sub-α phase, and then warming the cooled composition to about 57° to 72°F (about 13.9° to 22.2°C) so that the remaining triglycerides transform into a stable β-3 phase (*id*., lines 51 to 64). The holding period was typically at least about 16 hours, preferably at least about 40 hours (column 14, lines 60 to 64). The composition was likely to bloom if it did not completely transform into the β-3 phase, or if a sufficient portion of the β-3 phase formed did not melt (column 15, lines 14 to 18).

Chocolate products resistant to bloom were disclosed by Cain, et al., in European Patent Publications Nos. 0521549 A1 and 0530864 Al. These contained at least about 0.5%, preferably 0.8 to 2%, of a hardstock fat bearing saturated C₈ to C₁₄, particularly C₁₂ to C₁₄, moieties and saturated C₁₈ or greater moieties, typically provided by a lauric fat such as an interesterified mixture of hardened palm oil and palm kernel oil. With this additive, however, tempering was still required (according to European Patent Publication No. 0530864, page 2, lines 50 to 51). For coatings on filled confections, best results were obtained when 0.6 to 1.2% was employed, and this could be achieved by preparing a filling with a lauric fat and then storing the confections until the fat migrated into the coating (European Patent Publication No. 0521549, page 3, lines 33 to 35).

The use of "seed" crystals to replace tempering machines and produce bloom resistant chocolate has also been demonstrated. BOB (1,3-dibenoyl-2-oleoylglycerol) has a polymorph with similar shape to cocoa butter with a melting temperature around 52°C. When the chocolate melts, BOB is still present as a seed and so it prevents blooming (Mori, H. "BOB: A Fat Bloom Inhibitor," *Manuf*. *Confect*. (1989) (November) pages 63 to 65).

It would be desirable to have a method of retarding fat bloom that did not involve the use of additives, particularly lauric fats now perceived by some consumers as less desirable because of their component of saturated fatty acids suspected of enhancing atherosclerosis. It would also be desirable to have a method of retarding fat bloom that was not so critically dependent on time, temperature, and processing conditions as conventional methods.

### DISCLOSURE OF THE INVENTION

It is an object of the invention to provide a new method for retarding fat bloom in chocolate and other fat-based confectionery compositions, particularly those containing cocoa butter.

It is a further and more specific object of the invention to provide a method for retarding fat bloom in fat-based confectionery products that does not involve the use of additives or additional fats that may be undesirable for the health of human consumers.

These and other objects are achieved at least in part by the present invention, which provides a unique method for retarding bloom in a fat-based confectionery mass wherein the fat can crystallize as a β crystal polymorph comprising undercooling the mass by at least about 3 °C below the melting point of the β polymorph and subjecting said mass to ultrasonic energy in amounts effective to generate stable crystals of the β polymorph in said mass.

Typical chocolate compositions contain cocoa butter and stable β crystals are generated therein by application of the method; some embodiments contain other oils or fats such as milk fat or nut oils, such as hazelnut oil. Besides cocoa butter a chocolate confectionery mass will also contain chocolate solids. It may further include one or more cocoa butter equivalents or cocoa butter substitutes. It may additionally or alternatively include so-called low caloric fats, such as those described in U.S. Patents No. 5,258,197 or in U. S. Patent No. 5,275,835. A typical chocolate composition contains at least 10% cocoa liquor, at least 25% by weight fat, mainly cocoa butter, and not more than 2% to 5% of vegetable fat derived from sources other than cacao bean.

Ultrasonic energy is typically energy applied at a frequency above about 16 kHz, e.g. from about 20 kHz up to several thousand MHz, e.g. up to about 2000 MHz. In the method of the invention the ultrasound energy is preferably applied in static or continuous flow conditions, typically at a frequency of from about 16 kHz, preferably at least about 20 kHz, to up about 100 kHz or more, for example up to about 20 MHz or more.

The ultrasonic energy can be applied continuously or in the form of pulses. It can be applied to a continuous chocolate flow or to chocolate in static condition, for example to chocolate which has been poured into a mold.

In some cases, from about 9 kJ/kg to approximately 20 kJ/kg ultrasonic energy is employed.

Hence in accordance with a preferred aspect of the present invention there is provided a method for retarding bloom in a chocolate mass containing fat comprising cocoa butter, said method comprising the steps of undercooling the mass by at least about 4°C below the melting point of the β polymorph of the fat and subjecting said undercooled mass to ultrasonic energy in amounts effective to induce formation of crystals of the β polymorph in said undercooled mass without raising the temperature of said mass above the melting point of the β polymorph.

The method of the invention retards bloom in chocolate products, preferably for a year or more when stored at room temperature. The method is also less sensitive to process deviations than other conventional methods that employ tempering, and reduces reworking in production, enhancing line output, cost savings, and consumer appeal. Chocolate products prepared using the method of the invention exhibit optimal shrinkage for ease in demolding, good gloss and snap, and a desirable texture.

### BRIEF DESCRIPTION OF THE FIGURES

Figure 1 is a diagram of an apparatus used for assessing the effects of ultrasound on nucleation and crystal growth in bulk samples;
Figure 2 is a plot of differential thermal analysis of cocoa butter from a stirred batch treated at 29°C with ultrasound and then hardened;
Figure 3 is a plot of differential thermal analysis of Milka® from a stirred batch treated at 25°C with ultrasound and then hardened;
Figure 4 is a differential thermal analysis plot of Milka® chocolate as produced conventionally which has been undercooled to 26°C, as well as a differential thermal analysis plot of a sample of Milka® which has been undercooled to 26°C and then ultrasonically treated;
Figure 5 is a graph showing the viscosity of Milka® samples following treatment at the different temperatures shown with a single pulse of ultrasound, after which the samples were maintained isothermally;
Figure 6 is a differential thermal analysis plot of cocoa butter processed with ultrasound in a surface heat exchanger without scraping, and then hardened;
Figure 7 is a differential thermal analysis plot of cocoa butter hardened with pulsed application of ultrasound and a similar plot of a non-sonicated control;
Figure 8 is a flow diagram of a part of a chocolate plant designed to utilise the method of the invention, upon a continuous flow of chocolate, with ultrasonification occurring prior to molding;
Figure 9 is a flow diagram of the corresponding part of a further form of chocolate plant that utilises the method of the invention, with ultrasonification being effected after molding and during cooling;
Figure 10 is a micrograph of a sample of conventionally produced Milka® chocolate after ageing for 8 months at a magnification of x 200, with a scale of 100 µm being shown; and
Figure 11 is a micrograph of a sample of ultrasonically treated Milka® chocolate at a magnification of x 200, with a scale of 100 µm being shown.

### INDUSTRIAL APPLICABILITY

The invention is based upon the finding that molten chocolate, cocoa butter, and other fat-based confectionery masses that are undercooled by at least about 3°C below the melting point of the β polymorph and exposed to short ultrasonic power pulses or to continuous ultrasonic power without increasing the temperature of the confectionery mass above the melting point of the β polymorph exhibit fat bloom resistance as well as other desirable properties including optimal shrinkage for demolding, enhanced glossiness, increased heat resistance, better snap and texture, and less sensitivity to process deviations.

In the practice of the invention, fat-containing chocolate confectionery compositions are treated to retard bloom by undercooling by at least about 3 °C and exposing the mass to ultrasonic energy for a time and at a frequency sufficient to induce nucleation of stable β polymorph crystals in the fat.

The melting point of the β polymorph is first measured, for example by careful hand tempering of the chocolate composition to be processed followed by differential thermal analysis (DTA). Provided that the hand tempering has been carried in optimal fashion, the resulting conventional DTA plot will exhibit a trough with a minimum at a temperature corresponding to the melting point of the β polymorph. Once the melting point of the β polymorph has been measured it is readily possible to determine the temperature to which the chocolate confectionery mass should be undercooled prior to subjection to ultrasonic treatment.

The method of the invention is useful for processing any fat-containing chocolate confectionery mass. By "chocolate" is meant a composition containing cocoa butter or a cocoa butter mimetic. Cocoa butter "mimetics" are fats that exhibit sharp melting profiles similar to cocoa butter and/or contain a complement of symmetrical triglycerides similar to cocoa butter, or a similar fat that may or may not have a cocoa butter component. Hence the composition may contain one or more so-called low caloric fats of the type described in U.S Patent No.5,258,197 or in U.S. Patent No. 5,275,835. The composition may also contain other edible oils or fats typically incorporated in confections such as milk fat or nut oils such as hazelnut oil, walnut oil, pecan oil, peanut oil, and the like, or mixtures thereof. The term thus includes, but is not limited to, dark chocolate, milk chocolate, white chocolate, chocolate-flavoured compounds or coatings, and mixtures thereof.

The method of the invention can be used to treat a confectionery fat or a confectionery composition comprising fat and a sweetener.

Typically the fat-containing confectionery mass comprises at least about 20% by weight of cocoa butter or other fat or fat mixture up to about 50% by weight, more preferably in the range of from about 25% by weight up to about 45% by weight. Thus a typical chocolate composition contains, according to the recipe selected, about 25% by weight, about 32% by weight, or in the region of from about 42% by weight up to about 44% by weight.

The chocolate confectionery mass is undercooled prior to application of ultrasonic energy. "Undercooling" is the cooling of a liquid below its melting point often without onset of crystallization; it is a metastable condition and the amount observed in a system is dependent on a number of variables including volume, purity, freedom from vibration, cooling rate, and the like. In the practice of the invention, the confectionery composition is undercooled by at least about 3°C. In some circumstances, such as when the composition contains milk fat as well as cocoa butter, the composition is undercooled by at least about 3.5° to 6°C, more preferably by about 4°C to about 5.5°C. In most circumstances, undercooling by no more than about 11 °C is preferred. As illustrated in the examples that follow, in some cases undercooling by about 6°C yields superior results. Hence normally some crystallization will have occurred as a result of the undercooling, resulting in the formation of α, β', *β*" or other non-stable polymorph crystals. These non-stable crystals are converted to the stable β polymorph, it is believed, upon subjection of the undercooled mass to the ultrasonic treatment.

Generally speaking the undercooling step will result in an increased viscosity being imparted to the fluid or semi-fluid confectionery mass and usually in the production of crystals of an unstable or semi-stable polymorph, e.g. the γ, α, or β' polymorph. In some cases the undercooled confectionery mass will, after subjection to the ultrasonication treatment, be too viscous to handle in conventional downstream processing equipment. In this case it may be expedient to re-warm the confectionery mass subsequent to the ultrasonication step to an appropriate temperature to facilitate such downstream processing. For example, in the case of a milk chocolate such as Milka® chocolate, the optimum processing temperature is 29°C, while the β polymorph has a melting point of 31°C. If the refined milk chocolate mass is undercooled by 4°C, i.e. if it is cooled to 27°C, and then subjected to suitable ultrasonication to induce formation of stable β polymorph crystals, the mass can then be re-warmed to 29°C for subsequent treatment, e.g. deposition into molds to form blocks or bars followed by controlled cooling.

"Freezing point" is the temperature at which the first evidence of crystallization is detected within a system. Because of supercooling, this is not a defined temperature. "Melting point" is an accurately defined transition temperature at which the last detectable crystal melts.

In the practice of the invention, ultrasonic energy is applied in static or continuous flow operations typical of ultrasonications such as that described in general terms in U.S. Patent No. 5,209,879 to Redding for the treatment of waxes, German Offenlegungsschrift No. 3,229,937 to Eckart and Brandt for the solidification of fats, or International Patent Specification No. WO 92/20420 to Acton and Morris, except that in the method of the invention compositions are undercooled as described above and conditions are modified to produce small stable crystals of the desirable β polymorph in the chocolate. The energy is preferably supplied continuously or as pulses at a frequency that typically ranges from about 20 kHz to about 20 MHz, preferably from about 20 kHz to about 2 MHz, and more preferably from about 20 kHz to about 100kHz. In a static system, i.e. in a system in which the chocolate or other fat-containing confectionery mass is static, such as when a molten chocolate has already been cast into molds, pulses can be employed having a duration of from about 0.1 to about 10 seconds, preferably about 1 to about 5 seconds. In a continuous flow system ultrasonic energy can be supplied continuously or in pulses using a frequency of, for example, from about 20 kHz up to about 20 MHz, typically from about 20 kHz to about 2 MHz. and preferably from about 20 kHz up to about 100 kHz. Pulse lengths can vary within wide limits, e.g. from about 0.1s up to about 10s, preferably from about 0.5s to about 4s. Similarly pulse intervals can also vary within wide limits, for example from about 0.1s up to about 60s, preferably from about 0.5s to about 5s. In one preferred method, 1 MHz pulses, each 2s long, are applied at 30 second intervals.

The overall energy input into the confectionery mass applied as a result of the ultrasonic treatment typically varies from about 5 kJ/kg to about 50 kJ/kg, preferably from about 8 kJ/kg to about 20 kJ/kg. In some embodiments, approximately 9 kJ/kg to approximately 20 kJ/kg ultrasonic energy are employed. Care must be taken not to raise the energy input to so high a level that the undercooled confectionery mass is heated above the melting point of the desired stable β crystal polymorph.

Methods of the invention are preferably used in conjunction with existing chocolate processing stages. Thus it is possible to subject the chocolate to the method of the invention before or during the tempering step. However, since the method of the invention produces crystals of the desired β polymorph, it is possible to dispense entirely with the usual tempering step. In this case the treated chocolate confectionery mass can be used directly for pouring or for robing and then cooled in a cooling tunnel in accordance with conventional cooling techniques.

In an alternative procedure the method of the invention is used to treat a portion of a chocolate or other fat-based confectionery mass in order to generate crystals of the β polymorph therein and then this portion is used to "seed" the remainder of the confectionery mass. "Seeding" is the induction of growth of a solid phase in a supercooled solution by the addition of small crystals of the solid phase. In chocolates, seeding can be employed as an alternative to tempering; to a liquid chocolate mass are added a few percent of powdered crystals in the stable β form. Hence in this alternative procedure the undercooled mass after subjection to ultrasonic energy and containing β polymorph crystals is admixed as a seed material containing seed crystals of said β polymorph with a second chocolate mass.

The method of the invention retards bloom in chocolate products, preferably for a year or more when stored at room temperature (20°-25°C). Products so treated are less sensitive to process deviations than those obtained using other tempering methods, and re-working in production (enhancing line output, cost savings, and freshness). Chocolate products treated with ultrasonics using the method of the invention exhibit optimal shrinkage, good gloss and snap, and a desirable texture. It was surprising and unexpected that ultrasonication ensures that nucleation occurs in a controlled manner rather than as a probabilistic event.

Whilst it is not intended to be bound by any one theory, it is believed that an advantage of the invention is that chocolate confectionery fats subjected to ultrasonic treatment under static or continuous flow conditions exhibit fat-bloom resistance by the induction of stable β crystals that act as seeds for β polymorphic crystallization during the shelf life of the product.

Another advantage is that chocolate confectionery masses treated according to the method of the invention exhibit optimal shrinkage, so that demolding of chocolate products can be accomplished without the application of additional forces such as mold-heating or torsion. Samples come easily out of the molds by gravity when they are turned upside down. Ultrasound can also be applied to molded products as an alternative to molded product processing.

Products so formed are glossy because of the increased β content. They exhibit increased heat resistance and better snap and texture. Unlike conventionally tempered chocolate products, products made according to the invention are less sensitive to process deviations. Production is simplified by having increased output and shortening cooling times; costs are saved because traditional tempering melting procedures are eliminated, products are fresher, and there is less risk of contamination.

It is a further advantage of the invention that significant energy savings are observed in the practice of the method. In some cases described more fully below, where polymorphic conversion occurred, only 7 to 30% of the energy was required compared to conventional tempering methods.

The following examples are presented to further illustrate and explain the present invention and should not be taken as limiting in any regard. Unless otherwise indicated all parts and percentages are by weight, and are based on the weight at the particular stage of processing being described.

### Example 1

The effects of ultrasound on nucleation and crystal growth on bulk samples are examined in this example.

In this Example and the ones that follow, the differential thermal analysis (DTA) peak temperatures of the triglyceride polymorphs contained in the cocoa butter and Milka® chocolate (which contains cocoa butter, milk fat and hazelnut oil used were as set out in Table 4:

**TABLE 4**

| | γ | α | β*''* | β*'* | β |
|---|---|---|---|---|---|
| cocoa butter | 17 | 23.6 | 28 | 33 | 35 |
| Milka® | 17 | 21 | 25 | 28 | 30 |

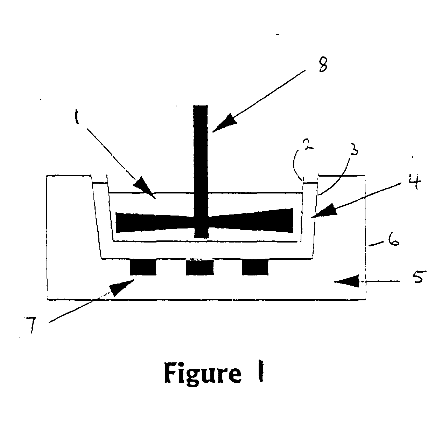

An apparatus illustrated diagrammatically in Figure 1 was employed. The experimental procedure involved melting 300 g cocoa butter or another chocolate product, indicated by reference numeral 1 in Figure 1, and warming to 40°C in a stainless steel pan 2. The pan 2 was then placed inside an outer pan 3 and the space 4 between them filled with a heat transmission fluid. The outer pan 3 could be cooled externally by means of a coolant 5 in a bath 6. Ultrasonic energy could be supplied in pulses of variable length at a frequency of from about 20 kHz up to about 100 kHz, e.g. about 50 kHz, to the chocolate 1 by means of transducers 7 mounted under the outer pan 3. The chocolate 1 is stirred by means of stirrer 8. The cocoa butter was cooled to a pre-set temperature of 29°C, 30°C or 33°C (determined using the data of Table 4) while being stirred vigorously. The sample was then held at this temperature for 10 minutes and a reference sample extracted and stored isothermally. The remaining cocoa butter then underwent ultrasonic treatment. Some treatments also involved reheating the treated sample.

Following the ultrasonic treatment, the samples were transferred to a controlled rate cooling apparatus and cooled through a standard hardening cycle by cooling to 15°C at 0.5°C per minute and then reheating to 23°C at 0.5°C per minute.

Analyses using DTA were then carried out. A standardized DTA procedure was adopted to allow for direct comparison between different samples (in this Example and those that follow). As used herein, the term "differential thermal analysis" (DTA) involves the detection and measurement of changes of state and heats of reaction in solids and melts, by simultaneously heating two samples of identical heat capacities and noting the difference in temperature between them, which becomes very marked when one of the two samples passes through a transition temperature with evolution of absorption of heat but the other does not. A small sample (typically 20 mg) was extracted at 4°C and placed in a DTA pan also at 4°C. This was then placed into the DTA chamber set at 10°C. The sample was left for a few minutes to allow it to reach thermal equilibrium with the chamber. Once this was achieved; the sample was heated to 40°C at 2°C per minute. In some studies the polymorphic composition immediately following an experimental treatment, and before hardening, was determined by rapidly cooling the sample within an analytical pan. This rapid rate of cooling essentially vitrifies any non-crystallized cocoa butter and the original crystal composition can then be determined on warming within a DTA pan.

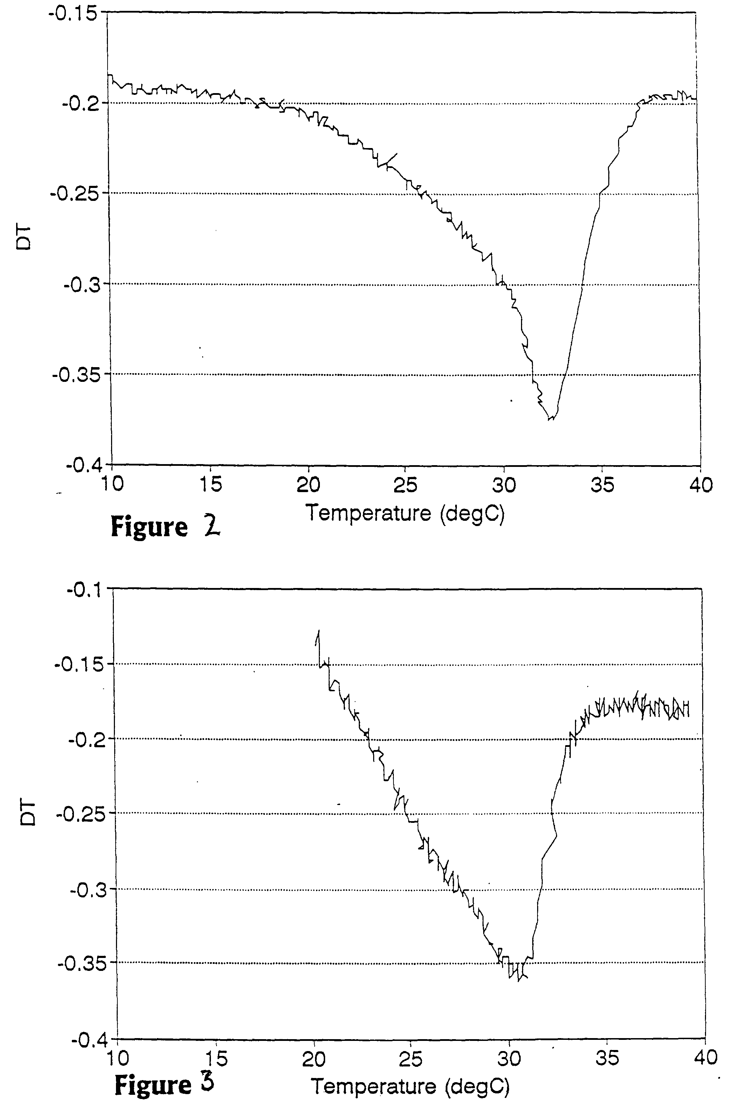

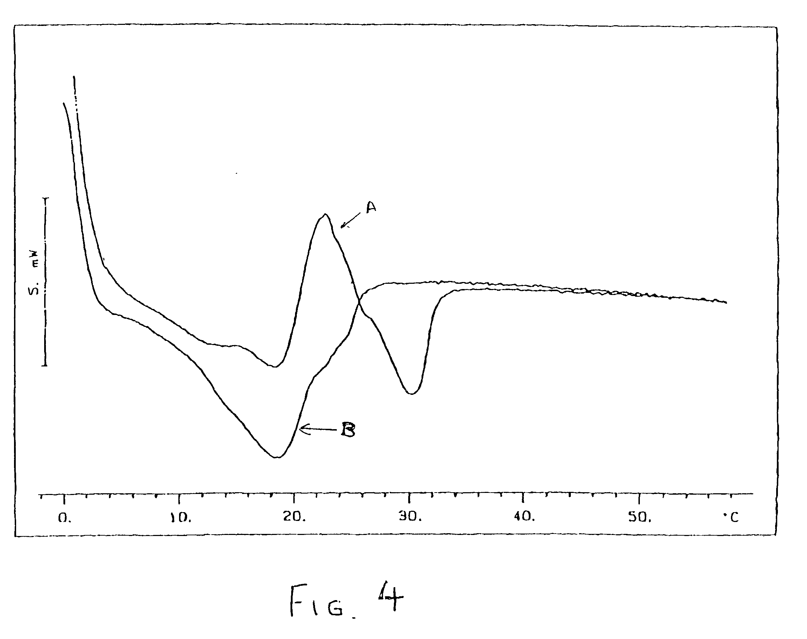

The DTA traces indicated that the β' polymorph was formed (Figure 2).

Experiments were also carried out with Milka® milk chocolate (containing milk fat and hazelnut oil as well as cocoa butter as described above), in which the β polymorph has a melting point of 30.5°C. In tests below this temperature and above 29°C both sonicated and reference samples exhibited random nucleation, whereas below 28°C temperature preferential nucleation occurred in the sonicated sample. The DTA analysis shows that at 28°C (2.5°C of undercooling) a polymorph with a melting point at 28.5°C (β' polymorph) is produced in the sonicated sample after application of short pulses of ultrasound. Rather surprisingly, it was found that samples hardened from this ultrasonic treatment shrank in a mold, were glossy, and displayed no evidence of bloom after 9 weeks storage at 20°C.

At temperatures below 26°C (greater levels of undercooling, 6°C) the β form is produced in the sonicated sample (Figure 3). This occurs either by direct nucleation from the liquid or by conversion from a lower polymorph. Direct hardening of a sample sonicated at 26°C produced material which exhibited little shrinkage in the mold, was glossy in appearance and, following 9 weeks storage at 20°C, displayed no evidence of bloom. DTA carried out when the sample was cooled rapidly from 26°C and then analyzed confirmed that the 26°C ultrasonic treatment resulted in the formation of β crystals, while in the control (non-sonicated sample) β crystals were not detected. The relevant DTA traces appear in Figure 4; line A is the trace for the sonicated sample, while line B is the corresponding trace for the non-sonicated sample. Line B shows a minimum at about 19°C indicating formation of α polymorph crystals. In contrast, the ultrasonicated sample indicates a trough in line A at 31°C, which is indicative of the formation of the β polymorph.

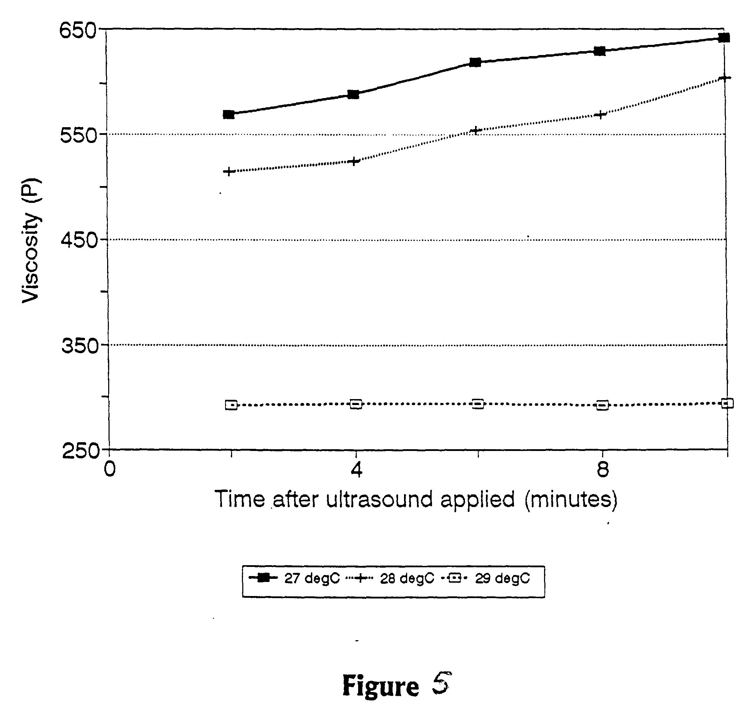

The β polymorph only forms at a high crystal number density when the chocolate is highly undercooled (i.e., cooled below the melting point without initiating freezing). This results in a product that is difficult to pour or enrobe and as such is likely to be unsuitable for a continuous process. The increase in viscosity of Milka® samples following the application of ultrasound at these temperatures are presented in Figure 5. Viscosity was determined using a Brookfield rotating-disc viscometer, which measures the drag on a rotating disc held at a fixed depth in a viscous liquid. The viscosity is proportional to the measured drag and hence is easily determined from a comparison with the measured viscosity of glucose solutions of known viscosity.

To reduce the viscosity, samples produced at 26.5°C were reheated to 29°C immediately after application of ultrasound. Once these samples reached 29°C they were then cooled through the standard cooling cycle. The samples produced in this way still contained the β polymorph and were of a suitable viscosity for pouring.

It was also possible to reheat the sample by application of ultrasound. Typical DTA curves for Milka® samples produced in this manner were compared against hand-tempered samples and found to be very similar. The peak value for the hand-tempered samples was determined to be 29.4°C and, for the ultrasonic-tempered material, 29.7°C. Samples hardened from this ultrasonic treatment shrank in the mold, had a high gloss, and displayed no evidence of bloom after 9 weeks storage at 20°C.

### Example 2

Continuous processing of chocolate products was investigated in a modified scraped surface heat exchanger, in which ultrasound was transmitted to cocoa butter, via the pipe walls and the coolant, from ultrasonic transducers fixed to the outer walls of the coolant housing. Cocoa butter was pumped from a sump at 40°C through a cooling coil and passed through the ultrasonic device before returning to the sump.

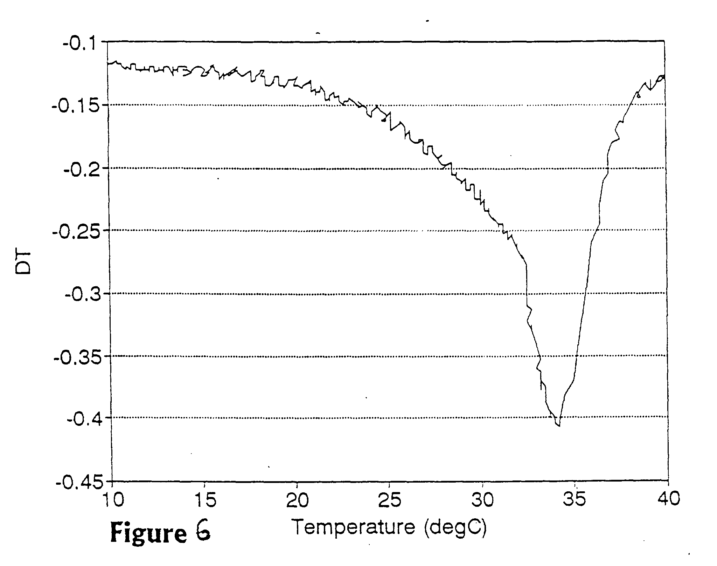

The modified scraped surface heat exchanger was operated mostly without the scraper, and because of its built-in cooling system it was possible to apply ultrasound continuously to the cocoa butter. The product sump was set to 34°C and the coolant temperature to 10°C, resulting in an outflow temperature of 31°C. DTA traces for this experiment show that while random nucleation occurred in the reference sample, the sonicated samples produced the β polymorph (Figure 6). When scraping was introduced similar results were obtained, and the β polymorph was produced. The ultrasonic energy transmitted into the cocoa butter was estimated to be about 60 kJ/kg. In control samples with no applied ultrasound, β crystals cannot be detected.

### Example 3

This example describes molding experiments.

The molding procedure involved pouring molten cocoa butter (or another chocolate product) at 40°C into a mold, also held at 40°C, and then cooling at 0.5°C per minute to 4°C. During cooling pulsed ultrasound was applied from the melting point of the β component to 10°C below it. At the end of the cooling cycle, the product was stored at 4°C. Reference samples were produced by repeating the above procedure with no application of ultrasound.

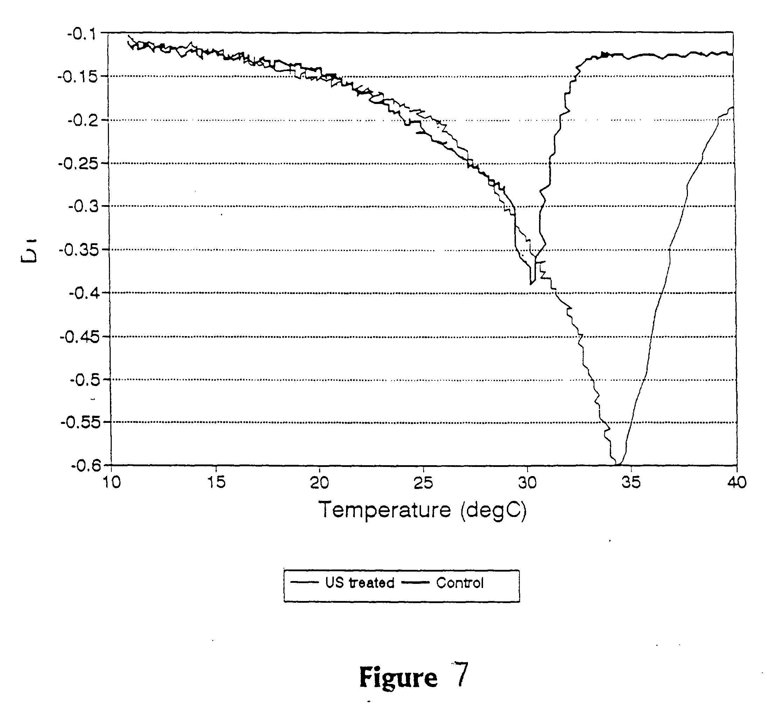

The DTA trace for the cocoa butter sample produced in the sonicated mould indicated that the β polymorph had been formed. The ultrasonic energy transmitted into the cocoa butter was estimated to be about 13 kJ/kg; no lower values were attempted. Figure 7 shows a comparison of this trace with that produced without sonication, indicating that preferential nucleation occurred with the ultrasound.

### Example 4

This example describes several tests comparing and contrasting conventionally tempered milk chocolate with Milka® chocolates prepared using the ultrasonication method of the invention.

Chocolate tablets prepared with sonication were stored under the conditions of Table 5 in an accelerated shelf life test.

**TABLE 5**

| Accelerated Shelf Life Test | | | |
|---|---|---|---|
| Test | Condition | Temperature | Rel. Humidity |
| 1 | tropical | 26-30°C | 85-95% |
| 2 | cycling | 14-18/22-26°C | 55-65% |
| 3 | storage | 18-22°C | 55-65% |
| 4 | cycling | 21-29°C | 45-75% |

Fat bloom was observed in test 1 which mimicked tropical conditions, but the surfaces of all the others showed no change. The results show that chocolates tempered using the method of the invention were heat-resistant. All the samples were shiny and exhibited no sign of fat bloom.

In a double blind sensory evaluation of ultrasonic-tempered and conventionally tempered chocolates, all 20 participants tasting the chocolates could discern no difference between samples and controls and all 20 participants thought that the ultrasonic-tempered chocolates exhibited a superior visual appearance. In physical analyses, differential scanning calorimetry (DSC) peaks showed that both conventionally and ultrasonically tempered chocolates had stable β-crystals. The ultrasonically tempered chocolates exhibited slightly more hardness than conventionally tempered chocolates (using a hardness cone measurement, 2.2 vs 1.9 MPa at 20°C, 1.8 vs 1.7 MPa at 22°C, and 1.5 vs 1.4 MPa at 24°C). The solid fat indices of the two types of chocolates were virtually identical (exhibiting solid contents of 72/73% at 10°C, 71/71% at 15°C, 65/66% at 20°C, 53/53% at 25°C and 19/20% at 30°C for the control and test chocolates, respectively). Snap at 20°C was significantly superior in the ultrasonically-tempered sample: 8 daN versus 5 for the control.

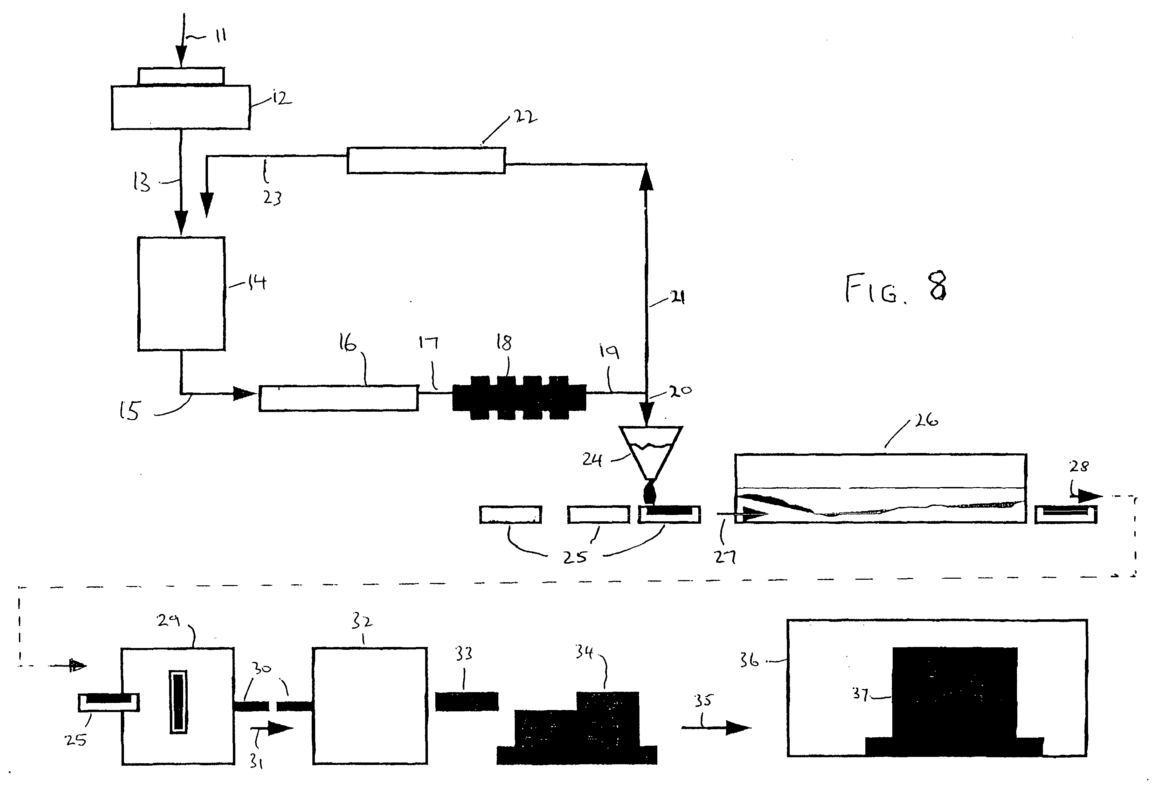

Figure 8 illustrates part of a first form of chocolate plant utilising the method of the invention. In this plant the ingredients for making a milk chocolate having the same composition as conventional Milka® chocolate, including cocoa butter, milk fat and hazelnut oil, are first mixed in a mixer (not shown) in conventional manner and then the resulting paste is fed to a refiner (not shown), for example a roll refiner. In the refiner the chocolate paste is refined in conventional manner to impart the desired texture of smoothness. The resulting refined chocolate is supplied in friable fleck form, as indicated by line 11, to a conche 12. The resulting liquid chocolate is then fed, as indicated by line 13, to a tank 14 from which it is passed in line 15 to a precooler 16 in which it is undercooled under carefully controlled cooling conditions by from about 4°C to about 5.5°C below the melting point of the β polymorph of Milka® chocolate (30.5°C), i.e. to a temperature of from about 26.5°C to about 25°C. From the precooler 16 the undercooled chocolate passes on in line 17 to an ultrasonication section 18 in which it is submitted to continuous ultrasonic treatment at an ultrasonic frequency within the range of from about 20 kHz to about 100 kHz or with pulses of such ultrasonic energy having a duration of from about 0.1s up to about 10s. This treatment results in imparting about 9 kJ/kg to about 20 kJ/kg to the flowing chocolate, provided that an appropriate chocolate flow rate is selected. The resulting ultrasonically treated chocolate typically contains from about 3% by weight to about 10% by weight of its fat content of crystals of the β polymorph. It flows on in line 19, part passing on to line 20 while the remainder is recycled in line 21 to reheater 22 and thence via line 23 to tank 14.

The chocolate in line 20 passes on to a depositor 24 which fills a succession of bar-shaped molds 25. The filled molds 25 then travel on into cooling tunnel 26, as indicated by arrow 27. In passage through cooling tunnel 26 the filled molds 25 are subjected to carefully controlled cooling conditions to effect solidification of the chocolate bars. The cooled bars, still in their molds 25, pass on as indicated by arrow 28, to a demolding unit 29. The bars 30 continue, as indicated by arrow 31, to a wrapping unit 32. Boxes 33 of wrapped bars are palletized as indicated at 34 and taken, as indicated by arrow 35, to storage in warehouse.36 in which the loaded pallets are indicated at 37.

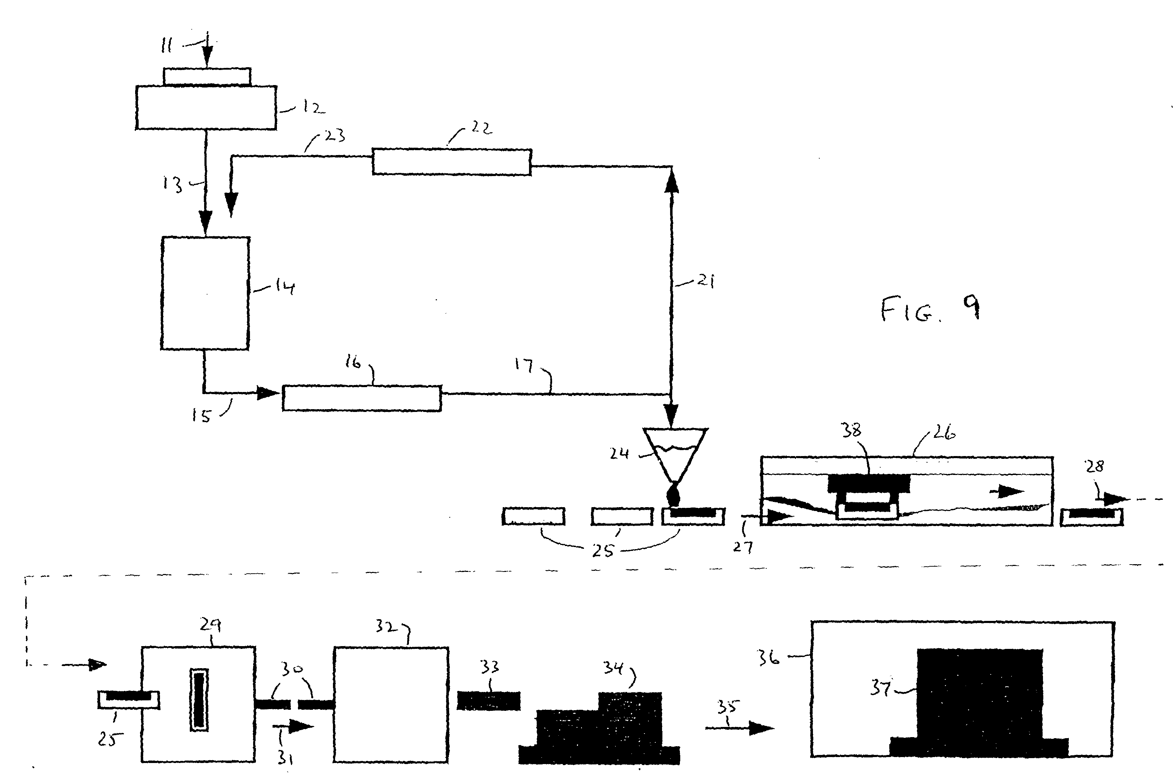

In Figure 9 like reference numerals have been used to indicate features of the plant of Figure 9 that are the same as the corresponding features of the plant of Figure 8. In the plant of Figure 9 cooling section 16 reduces the temperature of the Milka® chocolate composition to about 29°C and ultra sonication section 18 is omitted so that the flow from 17 is divided into the flows in lines 20 and 21. Instead ultrasonic transducers 38 are positioned within cooling tunnel 26 at a point in the cooling tunnel at which the chocolate is undercooled by from about 4°C to about 5.5°C, i.e is at a temperature of from about 26.5°C to about 25°C, and are arranged to apply ultrasonic energy at a frequency of in the range of from about 20 kHz to about 100 kHz, e.g. about 50 kHz, in appropriate quantity to the filled molds 25 as they pass underneath through the cooling tunnel 26. The amount of ultrasonic energy is controlled so as not to raise the temperature sufficiently to melt the β polymorph crystals and preferably so as not to raise the temperature of the chocolate above about 29°C.

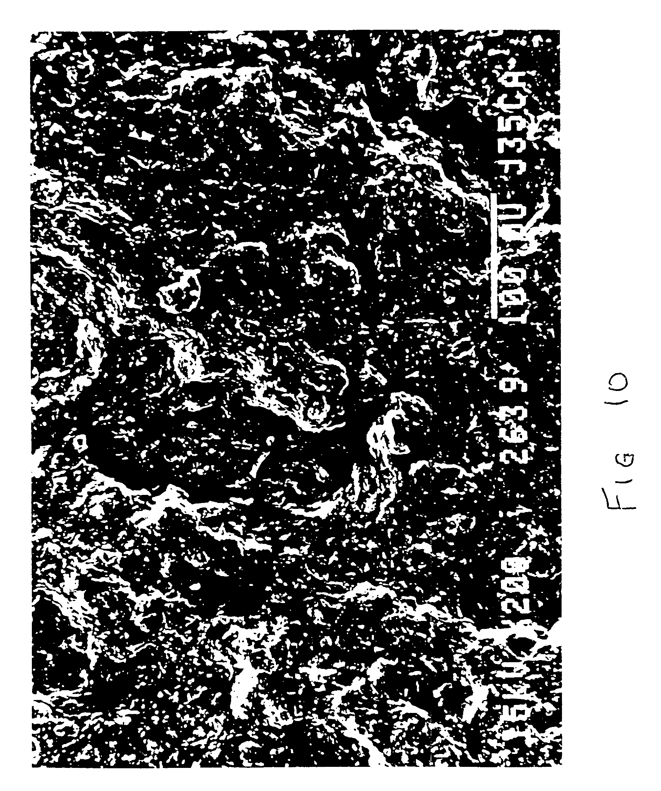

In Figures 10 there is shown a micrograph of a 10 mg sample of Milka® chocolate, which was produced in conventional manner and which had been aged for 8 months, at a magnification of 200 times. The white lines indicate the fat phase and how migration of fat over significant distances can occur, leading eventually to unsightly bloom on the surface of the chocolate.

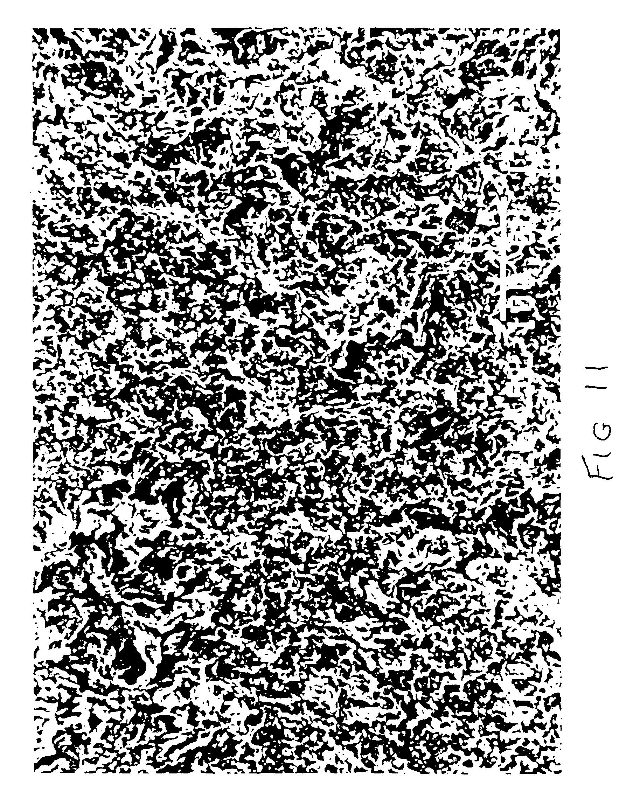

For comparison Figure 11 is a similar micrograph, also at a magnification of 200 times, of a 10 mg sample of Milka® chocolate which has been subjected to undercooling to 26°C and then subjected to ultrasonic treatment. The fat is much more uniformly distributed in Figure 11 than in Figure 11 and it is apparent that less migration of fat to the surface will occur with a consequently lower risk of bloom appearing on the surface of the chocolate.

## Claims

1. A method for retarding bloom in a fat-based confectionery mass wherein the fat can crystallize as a β polymorph comprising undercooling the mass by at least about 3°C below the melting point of the β polymorph and subjecting said mass to ultrasonic energy in amounts effective to generate stable crystals of said β polymorph in said mass.

2. A method according to claim 1, wherein said fat-based confectionery mass comprises cocoa butter.

3. A method according to claim 2, wherein the fat-based confectionery mass is undercooled by at least about 4°C.

4. A method according to claim 2 or claim 3, wherein said confectionery mass further comprises hazelnut oil, and said mass is undercooled by from about 4°C to about 6°C.

5. A method according to any one of claims 2 to 4, wherein said fat-based confectionery mass further comprises milk fat.

6. A method according to any one of claims 2 to 5 wherein said fat-based confectionery composition does not exhibit visually apparent bloom for at least about 1 year at room temperature.

7. A method according to any one of claims 1 to 5, wherein said ultrasonic energy is applied to said confectionery mass in a continuous flow condition.

8. A method according to any one of claims 1 to 5, wherein said ultrasonic energy is applied to said confectionery mass in a static condition.

9. A method according to any one of claims 1 to 8, wherein the ultrasonic energy is supplied at a frequency of from about 20 kHz to about 2 MHz.

10. A method according to claim 9, wherein the ultrasonic energy is applied at a frequency of from about 20 kHz to about 100 kHz.

11. A method according to any one of claims 1 to 10, wherein said ultrasonic energy comprises pulses 2 seconds long at 30 second intervals.

12. A method according to any one of claims I to 11, wherein ultrasonic energy is supplied to the undercooled mass in amounts of from about 8 kJ/kg to about 20 kJ/kg.

13. A method for retarding bloom in a chocolate mass containing fat comprising cocoa butter, said method comprising the steps of undercooling the mass by at least about 4°C below the melting point of the β polymorph of the fat and subjecting said undercooled mass to ultrasonic energy in amounts effective to induce formation of stable crystals of the β polymorph in said undercooled mass without raising the temperature of said mass above the melting point of the β polymorph.

14. A method according to claim 13, wherein said chocolate mass further comprises hazelnut oil and said chocolate mass is undercooled by from about 4°C to about 6°C.

15. A method according to claim 14, wherein said chocolate mass further comprises milk fat.

16. A method according to claim 15, wherein the melting point of the β polymorph in the chocolate mass is about 31°C and the chocolate mass is undercooled to a temperature of from about 25°C to about 27°C prior to subjection to ultrasonic energy.

17. A method according to claim 16, wherein the chocolate mass is undercooled to a temperature of about 27°C prior to subjection to ultrasonic energy.

18. A method according to any one of claims 15 to 17, wherein subsequent to the step of subjection to ultrasonic energy the chocolate mass is, if necessary, reheated to about 29°C in readiness for further processing.

19. A method according to any one of claims 13 to 18, wherein said ultrasonic energy is applied to said confectionery mass in a static condition after pouring into a mold.

20. A method according to any one of claims 13 to 19, wherein the ultrasonic energy is supplied at a frequency of from about 20 kHz to about 2 MHz.

21. A method according to claim 20, wherein the ultrasonic energy is applied at a frequency of from about 20 kHz to about 100 kHz.

22. A method according to any one of claims 13 to 21, wherein said ultrasonic energy comprises pulses of about 2 seconds long at about 30 second intervals.

23. A method according to any one of claims 13 to 22, wherein ultrasonic energy is supplied to the undercooled mass in amounts of from about 8 kJ/kg to about 20 kJ/kg.

24. A method according to any one of claims 13 to 23, wherein the undercooled mass after subjection to ultrasonic energy and containing β polymorph crystals is admixed as a seed material containing seed crystals of said β polymorph with a second chocolate mass.

## Patentansprüche

1. Verfahren zum Verzögern von Reif in einer auf Fett basierenden Süßwaren-Masse, worin das Fett als eine β-polymorphe Form kristallisieren kann, das Folgendes umfasst: Unterkühlen der Masse um mindestens ca. 3°C unter den Schmelzpunkt der β-polymorphen Form und Aussetzen genannter Masse einer Ultraschallenergie in Mengen, die zum Herbeiführen stabiler Kristalle von genannter β-polymorpher Form in genannter Masse wirksam sind.

2. Verfahren nach Anspruch 1, worin genannte auf Fett basierende Süßwaren-Masse Kakaobutter umfasst.

3. Verfahren nach Anspruch 2, worin die auf Fett basierende Süßwaren-Masse um mindestens ca. 4°C unterkühlt wird.

4. Verfahren nach Anspruch 2 oder 3, worin genannte Süßwaren-Masse ferner Haselnussöl umfasst und genannte Masse um von ca. 4°C bis ca. 6°C unterkühlt wird.

5. Verfahren nach einem der Ansprüche 2 bis 4, worin genannte auf Fett basierende Süßwaren-Masse ferner Milchfett umfasst.

6. Verfahren nach einem der Ansprüche 2 bis 5, worin genannte auf Fett basierende Süßwaren-Zusammensetzung keinen visuell offensichtlichen Reif für die Dauer von mindestens ca. 1 Jahr bei Raumtemperatur aufweist.

7. Verfahren nach einem der Ansprüche 1 bis 5, worin genannte Ultraschallenergie auf genannte Süßwaren-Masse in einem Zustand des kontinuierlichen Flusses aufgebracht wird.

8. Verfahren nach einem der Ansprüche 1 bis 5, worin genannte Ultraschallenergie auf genannte Süßwaren-Masse in einem statischen Zustand aufgebracht wird.

9. Verfahren nach einem der Ansprüche 1 bis 8, worin die Ultraschallenergie bei einer Frequenz von ca. 20 kHz bis ca. 2 MHz bereitgestellt wird.

10. Verfahren nach Anspruch 9, worin die Ultraschallenergie bei einer Frequenz von ca. 20 kHz bis ca. 100 kHz aufgebracht wird.

11. Verfahren nach einem der Ansprüche 1 bis 10, worin genannte Ultraschallenergie 2 Sekunden lange Impulse in Abständen von 30 Sekunden umfasst.

12. Verfahren nach einem der Ansprüche 1 bis 11, worin Ultraschallenergie der unterkühlten Masse in Mengen von ca. 8 kJ/kg bis ca. 20 kJ/kg bereitgestellt wird.

13. Verfahren zur Verzögerung des Reifs in einer Schokoladenmasse, die Fett enthält, das Kakaobutter umfasst, wobei genanntes Verfahren die folgenden Schritte umfasst: Unterkühlen der Masse um mindestens ca. 4°C unter den Schmelzpunkt der β-polymorphen Form des Fettes und Aussetzen genannter unterkühlter Masse der Ultraschallschallenergie in Mengen, die zum Induzieren der Bildung stabiler Kristalle der β-polymorphen Form in genannter unterkühlter Masse, ohne Anhebung der Temperatur genannter Masse über den Schmelzpunkt der β-polymorphen Form, wirksam ist.

14. Verfahren nach Anspruch 13, worin genannte Schokoladenmasse ferner Haselnussöl umfasst und genannte Schokoladenmasse um von ca. 4°C bis ca. 6°C unterkühlt wird.

15. Verfahren nach Anspruch 14, worin genannte Schokoladenmasse ferner Milchfett umfasst.

16. Verfahren nach Anspruch 15, worin der Schmelzpunkt der β-polymorphen Form in der Schokoladenmasse bei ca. 31°C liegt und die Schokoladenmasse auf eine Temperatur von ca. 25°C bis ca. 27°C unterkühlt wird, bevor sie der Ultraschallenergie ausgesetzt wird.

17. Verfahren nach Anspruch 16, worin die Schokoladenmasse, auf eine Temperatur von ca. 27°C unterkühlt wird, bevor sie der Ultraschallenergie ausgesetzt wird.

18. Verfahren nach einem der Ansprüche 15 bis 17, worin die Schokoladenmasse anschließend an den Schritt, bei dem sie der Ultraschallenergie ausgesetzt wird, in Bereitschaft zur weiteren Verarbeitung gegebenenfalls wieder auf ca. 29°C erhitzt wird.

19. Verfahren nach einem der Ansprüche 13 bis 18, worin genannte Ultraschallenergie auf genannte Süßwaren-Masse in einem statischen Zustand nach dem Gießen in eine Form aufgebracht wird.

20. Verfahren nach einem der Ansprüche 13 bis 19, worin die Ultraschallenergie bei einer Frequenz von ca. 20 kHz bis ca. 2 MHz bereitgestellt wird.

21. Verfahren nach Anspruch 20, worin die Ultraschallenergie bei einer Frequenz von ca. 20 kHz bis ca. 100 kHz aufgebracht wird.

22. Verfahren nach einem der Ansprüche 13 bis 21, worin genannte Ultraschallenergie ca. 2 Sekunden lange Impulse in ca. 30 Sekunden Abständen umfasst.

23. Verfahren nach einem der Ansprüche 13 bis 22, worin Ultraschallenergie an die unterkühlte Masse in Mengen von ca. 8 kJ/kg bis ca. 20 kJ/kg bereitgestellt wird.

24. Verfahren nach einem der Ansprüche 13 bis 23, worin die unterkühlte Masse, nachdem sie der Ultraschallenergie ausgesetzt wurde, und die β-polymorphe Kristalle enthält, als ein Impfmaterial, das Impfkristalle von genannter β-polymorpher Form enthält, mit einer zweiten Schokoladenmasse beigemischt wird.

## Revendications

1. Procédé pour retarder les fleurs dans une pâte de confiserie à base de matière grasse dans lequel la matière grasse peut se cristalliser comme un polymorphe β comprenant sous-refroidir la pâte d'au moins environ 3°C au-dessous du point de fusion du polymorphe β et soumettre ladite pâte à une énergie ultrasonore en des quantités effectives pour générer des cristaux stables dudit polymorphe β dans ladite pâte.

2. Procédé selon la revendication 1, dans lequel ladite pâte de confiserie à base de matière grasse comprend du beurre de cacao.

3. Procédé selon la revendication 2, dans lequel la pâte de confiserie à base de matière grasse est sous-refroidie d'au moins environ 4°C.

4. Procédé selon la revendication 2 ou la revendication 3, dans lequel ladite pâte de confiserie comprend en outre de l'huile de noisette, et ladite pâte est sous-refroidie d'environ 4°C à environ 6°C.

5. Procédé selon l'une quelconque des revendications 2 à 4, dans lequel ladite pâte de confiserie à base de matière grasse comprend en outre de la matière grasse de lait.

6. Procédé selon l'une quelconque des revendications 2 à 5 dans lequel ladite composition de confiserie à base de matière grasse ne présente aucune fleur visuellement apparente pendant au moins environ 1 an à température ambiante.

7. Procédé selon l'une quelconque des revendications 1 à 5, dans lequel ladite énergie ultrasonore est appliquée à ladite pâte de confiserie dans une condition d'écoulement continu.

8. Procédé selon l'une quelconque des revendications 1 à 5, dans lequel ladite énergie ultrasonore est appliquée à ladite pâte de confiserie dans une condition statique.

9. Procédé selon l'une quelconque des revendications 1 à 8, dans lequel l'énergie ultrasonore est fournie à une fréquence d'environ 20 kHz à environ 2 MHz.

10. Procédé selon la revendication 9, dans lequel l'énergie ultrasonore est appliquée à une fréquence d'environ 20 kHz à environ 100 kHz.

11. Procédé selon l'une quelconque des revendications 1 à 10, dans lequel ladite énergie ultrasonore comprend des impulsions de 2 secondes de long à des intervalles de 30 secondes.

12. Procédé selon l'une quelconque des revendications 1 à 11, dans lequel l'énergie ultrasonore est fournie à la pâte sous-refroidie en des quantités d'environ 8 kJ/kg à environ 20 kJ/kg.

13. Procédé pour retarder les fleurs dans une pâte de chocolat contenant de la matière grasse comprenant du beurre de cacao, ledit procédé comprenant les étapes consistant à sous-refroidir la pâte d'au moins environ 4°C au-dessous du point de fusion du polymorphe β de la matière grasse et soumettre ladite pâte sous-refroidie à une énergie ultrasonore en des quantités effectives pour provoquer la formation de cristaux stables du polymorphe β dans ladite pâte sous-refroidie sans élever la température de ladite pâte au-dessus du point de fusion du polymorphe β.

14. Procédé selon la revendication 13, dans lequel ladite pâte de chocolat comprend en outre de l'huile de noisette et ladite pâte de chocolat est sous-refroidie d'environ 4°C à environ 6°C.

15. Procédé selon la revendication 14, dans lequel ladite pâte de chocolat comprend en outre de la matière grasse de lait.

16. Procédé selon la revendication 15, dans lequel le point de fusion du polymorphe β dans la pâte de chocolat est d'environ 31°C et la pâte de chocolat est sous-refroidie à une température d'environ 25°C à environ 27°C avant d'être soumise à l'énergie ultrasonore.

17. Procédé selon la revendication 16, dans lequel la pâte de chocolat est sous-refroidie à une température d'environ 27°C avant d'être soumise à l'énergie ultrasonore.

18. Procédé selon l'une quelconque des revendications 15 à 17, dans lequel suite à l'étape de soumission à l'énergie ultrasonore la pâte de chocolat est, si nécessaire, réchauffée à environ 29°C prête au traitement ultérieur.

19. Procédé selon l'une quelconque des revendications 13 à 18, dans lequel ladite énergie ultrasonore est appliquée à ladite pâte de confiserie dans une condition statique après versement dans un moule.

20. Procédé selon l'une quelconque des revendications 13 à 19, dans lequel l'énergie ultrasonore est fournie à une fréquence d'environ 20 kHz à environ 2MHz.

21. Procédé selon la revendication 20, dans lequel l'énergie ultrasonore est fournie à une fréquence d'environ 20 kHz à environ 100 kHz.

22. Procédé selon l'une quelconque des revendications 13 à 21, dans lequel l'énergie ultrasonore comprend des impulsions d'environ 2 secondes de long à des intervalles d'environ 30 secondes.

23. Procédé selon l'une quelconque des revendications 13 à 22, dans lequel l'énergie ultrasonore est fournie à la pâte sous-refroidie en des quantités d'environ 8 kJ/kg à environ 20 kJ/kg.

24. Procédé selon l'une quelconque des revendications 13 à 23, dans lequel la pâte sous-refroidie après soumission à l'énergie ultrasonore et contenant des cristaux polymorphes β est mélangée en tant que matière d'ensemencement contenant des cristaux en germes dudit polymorphe β avec une deuxième pâte de chocolat.
